# EUROPEAN PATENT APPLICATION

(11) **EP 2 446 741 A1**
(43) Date of publication of application: **02.05.2012**
(21) Application number: 10792163.7
(22) Date of filing: 24.06.2010
(51) Int. Cl.: A01N 3/00, A01C 1/00, A01F 25/00

(54) **METHOD FOR STORAGE OF SEEDS**

(30) Priority: 25.06.2009 JP 2009151597
(71) Applicant: Morishita Jintan Co., Ltd., Osaka-shi Osaka 540-8566 (JP); Niigata University, Niigata 950-2181 (JP)
(72) Inventor: ASADA, Masanori, Osaka-shi Osaka 540-8566 (JP); KANAYA, Tadashi, Osaka-shi Osaka 540-8566 (JP); NAKATSUJI, Masaaki, Osaka-shi Osaka 540-8566 (JP); KAMAGUCHI, Ryosei, Osaka-shi Osaka 540-8566 (JP); IWAMOTO, Yuzuri, Niigata-shi Niigata 950-2035 (JP)
(74) Representative: Clements, Andrew Russell Niel
(86) International application number: PCT/JP2010/060741
(87) International publication number: WO 2010/150845

(57) **Abstract**

The present invention provides a method for storing seeds, comprising the step of immersing seeds in an oily substance having a boiling point of 100°C or higher. According to the method for storing seeds of the present invention, the germination rate and the germination vigor of seeds can be stably maintained for a long period of time in a simple manner.

## Description

### Technical Field

The present invention relates to a method for storing seeds of plants such as garden plants, vegetables, and cereals. More particularly, the present invention relates to a method for storing seeds that makes it possible to stably maintain germination rate and germination vigor of seeds for a long period of time in a simple manner by immersing the seeds in an oily substance.

### Background Art

In plant cultivation, usually, sowing is performed first. Plant seeds after seed production are usually stored under constant conditions until being subjected to sowing. It is known that those storage conditions have an influence on the germination rate and the germination vigor of sown seeds. For example, in the case where seeds are stored at normal temperature, the germination rate of the seeds rapidly decreases. For this reason, usually, seeds are stored under cool and dark conditions, but decreases in the germination rate and the germination vigor of the seeds are inevitable. Moreover, although storage under vacuum conditions has also been attempted, a special apparatus for this purpose is required, resulting in the problem of increased costs. To address these issues, a method for storing seeds that makes it possible to stably maintain the germination rate and the germination vigor of seeds for a long period of time in a simple manner has been sought after.

Patent Document 1 discloses a method for storing stevia seeds characterized in that stevia seeds are stored in a state in which the seeds are immersed in one solvent selected from acetone, n-propanol, and hexane. Stevia seeds that have been stored by this method exhibit a high germination rate even after a long period of time has elapsed.

However, with the method disclosed in Patent Document 1, a hermetically sealable container is used in order to prevent the solvent from volatilizing, and it is necessary to hermetically seal the container after immersing seeds in the solvent within the container. Thus, storage of seeds after seed production or sowing of seeds after storage requires the steps of opening and hermetically sealing the storage container and is therefore complicated. Furthermore, there is a risk that volatilization of the solvent may occur during storage of seeds, impairing the germination rate of the seeds, and there is a problem in that in order to avoid such a risk, it is necessary to constantly control the amount of the solvent during storage.

### Prior Art Documents

### Patent Documents

Patent Document 1: Japanese Laid-Open Patent Publication No. 55-99129

### Summary of Invention

### Problems to be Solved by the Invention

It is an object of the present invention to provide a method for storing seeds that makes it possible to stably maintain the germination rate and the germination vigor of seeds for a long period of time in a simple manner.

### Means for Solving the Problems

After conducting diligent research in order to solve the above-described problem, the inventors of the present invention found that the germination rate and the germination vigor of seeds can be stably maintained for a long period of time by immersing the seeds in an oily substance, and accomplished the present invention.

The present invention provides a method for storing seeds including the step of immersing seeds in an oily substance having a boiling point of 100°C or higher.

In an embodiment, the oily substance has a melting point of 60°C or lower.

In an embodiment, the oily substance is at least one selected from the group consisting of fats and oils, fatty acids, fatty acid esters, hydrocarbons having 7 or more carbon atoms, chain ethers having 8 or more carbon atoms, alcohols, terpenes, sterols, silicones, and beeswax derivatives.

In an embodiment, the seeds are seeds of at least one selected from the group consisting of cereal crops, vegetables, fruit trees, flowers and ornamental plants, trees, pulses, lawn grasses, and pasture grasses.

### Effects of Invention

With the method for storing seeds of the present invention, the germination rate and the germination vigor of seeds can be stably maintained for a long period of time in a simple manner. In addition, it is not necessarily required to use a special apparatus or means such as a refrigerator, a freezer, or liquid nitrogen, and the seeds can be stored anywhere regardless of whether it is indoors or outdoors. Thus, the method is effective in increasing the efficiency and reducing the costs of plant cultivation, as well as enhancing and maintaining the commercial value of resulting products.

### Brief Description of Drawings

[Fig. 1] Fig. 1 is a schematic illustration showing an example of a device for encapsulating seeds in seamless capsules.
[Fig. 2] Fig. 2 is a graph showing time-dependent changes in the germination rate after sowing of seeds of *Eustoma grandiflorum* "F₁ Mellow Violet".
[Fig. 3] Fig. 3 is a graph showing time-dependent changes in the germination rate after sowing of seeds of *Eustoma grandiflorum* "F₁ Mellow Pink".
[Fig. 4] Fig. 4 is a graph showing time-dependent changes in the germination rate after sowing of seeds of *Eustoma grandiflorum* "Kyo no Warabe".
[Fig. 5] Fig. 5 is a graph showing time-dependent changes in the germination rate after sowing of seeds of *Eustoma grandiflorum* "F₁ Mellow Violet".

### Mode for Carrying Out the Invention

The method for storing seeds of the present invention includes the step of immersing seeds in an oily substance having a boiling point of 100°C or higher.

According to the present invention, an oily substance that does not readily volatilize is used for the purpose of long-term storage of seeds. Accordingly, the oily substance has a boiling point of 100°C or higher, preferably 150°C or higher, and more preferably 200°C or higher.

Although there is no particular limitation to the physical form of the oily substance used in the present invention during storage of seeds, it is preferable that the oily substance is liquid for convenience in proceeding to sowing. Accordingly, the oily substance has a melting point of 60°C or lower, preferably 40°C or lower, and more preferably 20°C or lower.

Examples of the oily substance used in the present invention include fats and oils, fatty acids, fatty acid esters, hydrocarbons having 7 or more carbon atoms (aliphatic hydrocarbons, aromatic hydrocarbons, and the like), chain ethers having 8 or more carbon atoms, alcohols, terpenes, sterols, silicones, and beeswax derivatives. These oily substances are used alone or in combination of two or more.

Examples of the fats and oils include soybean oil, rice bran oil, sesame oil, palm oil, corn oil, peanut oil, cottonseed oil, coconut oil, rapeseed oil, olive oil, castor oil, cacao butter, beef tallow, lard, horse fat, whale oil, margarine, shortening, hydrogenated fats and oils, and lecithin.

Examples of the fatty acids include saturated fatty acids such as hydroxypropionic acid, butanoic acid, pentanoic acid, hexanoic acid, heptanoic acid, octanoic acid, nonanoic acid, decanoic acid, dodecanoic acid, myristic acid, palmitic acid, and stearic acid and unsaturated fatty acids such as palmitoyl acid, oleic acid, and linoleic acid. Fatty acids having 4 or more carbon atoms are preferably used, but there is no limitation to these.

Examples of the fatty acid esters include ethyl butyrate, glycerol esters of fatty acids (fatty acid monoglycerides, fatty acid diglycerides, fatty acid triglycerides, and the like), and fatty acid esters of sugars (sucrose fatty acid esters, sorbitan fatty acid esters, and the like). As fatty acids constituting glycerol esters of fatty acids or fatty acid esters of sugars, medium-chain fatty acids (specifically, fatty acids having 8 to 12 carbon atoms) and long-chain fatty acids (specifically, fatty acids having 14 to 18 carbon atoms) are preferably used, but there is no limitation to these. Examples of such fatty acids include saturated fatty acids such as butanoic acid, pentanoic acid, hexanoic acid, heptanoic acid, octanoic acid, nonanoic acid, decanoic acid, dodecanoic acid, myristic acid, palmitic acid, and stearic acid and unsaturated fatty acids such as palmitoyl acid, oleic acid, and linoleic acid.

Examples of the hydrocarbons having 7 or more carbon atoms include aliphatic hydrocarbons, such as octane, nonane, and decane, and their derivatives and the like (e.g., haloalkane), aromatic hydrocarbons, such as toluene and xylene, and their derivatives and the like, and kerosene, light oil, and the like, which are mixtures of the aforementioned hydrocarbons.

Examples of the chain ethers having 8 or more carbon atoms include dibutyl ether, polyethylene glycol, and polypropylene glycol.

Examples of the alcohols include higher alcohols such as decyl alcohol, undecyl alcohol, myristyl alcohol, and cetyl alcohol and dihydric or trihydric alcohols having a boiling point of 100°C or higher, such as glycerol, propanediol, and ethylene glycol.

Examples of the terpenes include camphor oil and mint oil.

Examples of the sterols include cholesterol, B-sitosterol, and campesterol.

Examples of the silicones include silicone oil and silicone grease.

Examples of the beeswax derivatives include polyoxyethylene sorbitol beeswax.

Among the aforementioned oily substances, especially, triglycerides or diglycerides of medium-chain fatty acids or long-chain fatty acids are preferably used in the light of avoidance of thermal abuse of seeds and biodegradability. These oily substances are liquid at normal temperature and do not need to be melted for the immersion of seeds therein, and therefore it is possible to avoid applying a heat load to seeds and causing damage thereto. In the case where an oily substance that is solid at normal temperature or a non-biodegradable oily substance, such as a synthetic resin, is used, the oily substance on the surface of seeds may be removed by wiping or other physical methods before sowing the seeds.

The oily substance may further include glycerol esters of fatty acids, polyglycerol esters of fatty acids, succinic acid esters of monoglycerides, sucrose fatty acid esters, sorbitan fatty acid esters, lecithin, and the like as emulsifiers, if necessary. These emulsifiers are used alone or in combination of two or more.

Although there is no particular limitation to the plant seeds used in the present invention, for example, seeds of garden plants, vegetables, cereals, and the like are used. Specifically, seeds of cereal crops, vegetables, fruit trees, flowers and ornamental plants, trees, pulses, lawn grasses, pasture grasses, and the like are used. The seeds of these plants may be heliophilous, or may be sciophilous. There is no particular limitation to the size of the plant seeds as well.

Examples of the cereal crops include rice, barley, wheat, barnyard grass, maize, and foxtail millet. Examples of the vegetables include pumpkin, turnip, cabbage, white radish, Chinese cabbage, spinach, sweet pepper, and tomato. Examples of the fruit trees include orange, apple, persimmon, Japanese apricot, pear, grape, and peach. Examples of the flowers and ornamental plants include chrysanthemum, gerbera, pansy, orchid, peony, tulip, and *Eustoma grandiflorum.* Examples of the trees include azalea, sawtooth oak, Japanese cedar, Japanese cypress, oak, and beech. Examples of the pulses include adzuki bean, common bean, soybean, peanut, broad bean, and pea. Examples of the lawn grasses include mascarene grass, bentgrass, and Japanese lawn grass. Examples of the pasture grasses include alfalfa, clover, and milk vetch.

In the method of the present invention, immersing seeds in an oily substance refers to a state in which most or all of the seeds are immersed in and covered with the oily substance, and the seeds may be completely immersed in the oily substance, or may partially protrude from the surface of the oily substance.

Although there is no particular limitation to the method for immersing seeds in an oily substance, a method in which an oily substance and seeds are simply mixed, a method in which seeds are encapsulated in seamless capsules, and other methods can be used. The method in which an oily substance and seeds are simply mixed is the simplest method. Seeds encapsulated in seamless capsules (encapsulated seeds in seamless capsules) are easy to be handled and have high physical strength, and therefore, have the advantage of being suited to mechanical sowing. Examples of the method for encapsulating seeds in seamless capsules include methods disclosed in Japanese Laid-Open Patent Publication No. 59-131355, Japanese Laid-Open Patent Publication No. 11-79964, Japanese Laid-Open Patent Publication No. 58-22062, Japanese Laid-Open Patent Publication No. 3-52639, and Japanese Laid-Open Patent Publication No. 7-069867.

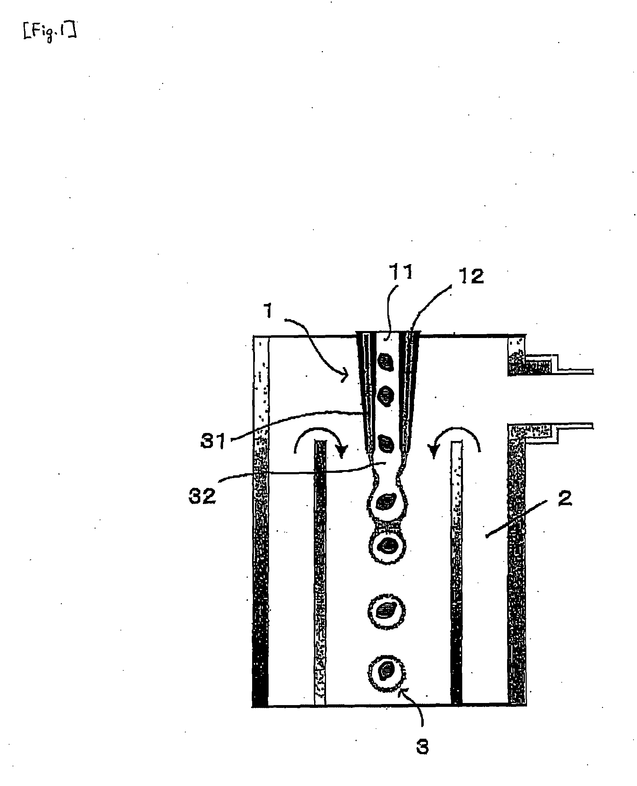

Encapsulation of seeds in seamless capsules is performed by, for example, a method of dropping in fluid using a device shown in Fig. 1. In the device, a concentric double nozzle 1 is disposed in a carrier fluid 2 (a liquid oil) flowing downward at a constant rate, with the outlet of the nozzle faces downward. When an oily substance containing plant seeds to be encapsulated (an inner layer composition 32) and an outer layer composition 31 are simultaneously injected at a constant rate from an innermost nozzle (an inner nozzle 11) and an outer nozzle (an outer nozzle 12), respectively, of the concentric double nozzle 1, the seeds can be successively encapsulated in spherical seamless capsules (seamless capsules 3) due to the interfacial tension that acts between the carrier fluid 2 and the outer layer composition 31.

Although there is no particular limitation to the mixing ratio of the seeds to the oily substance, the amount of the oily substance is preferably 0.1 to 100000 parts by weight and more preferably 0.5 to 10000 parts by weight with respect to 1 part by weight of the seeds.

According to the method of the present invention, although there is no particular limitation to the storage temperature of the seeds, the storage temperature is -200°C or higher, preferably -80°C or higher, more preferably -20°C or higher, and even more preferably 0°C or higher and is 60°C or lower, preferably 40°C or lower, and more preferably 20°C or lower.

According to the method of the present invention, there is no particular limitation to the storage period of the seeds.

There is no particular limitation to the method for germinating seeds that have been stored using the method of the present invention. There is no difference in the germination method between seeds that have been immersed in an oily substance and seeds that have not been immersed in any oily substance. The seeds removed from the oily substance can be germinated by sowing the seeds in a cell tray or a field and sprinkling water thereon. It is conceivable that at this time, the oily substance that covers the seeds runs down, and the seeds come into contact with water and air, resulting in germination. For this reason, it is preferable that when seeds are to be germinated, the temperature is at the melting point of the oily substance or higher. The encapsulated seeds in the seamless capsules can be sown in the cell tray or the field as they are, and the seeds be germinated by water sprinkling. It is preferable that in the encapsulated seeds in the seamless capsules, the outer layer composition 31 is composed of a substance having biodegradability.

It is conceivable that the method of the present invention makes it possible to stably maintain the germination rate and the germination vigor of seeds for a long period of time because the amount of oxygen that is supplied to seeds in a special environment in which the seeds are immersed in an oily substance is favorable.

### Examples

Hereinbelow, the present invention will be described in further detail by way of examples, but it goes without saying that the present invention is not limited to the examples.

### (Germination Rate Test)

After a predetermined amount of culture soil (Metro-Mix350, manufactured by Scotts) was filled into a cell tray, 100 seeds were sown, and water sprinkling was performed as necessary. With regard to the light conditions, suitable conditions for each seed type were adopted. After sowing, the number of germinated seeds was measured over time, and the number of germinated seeds with respect to the 100 seeds was calculated as a germination rate (%).

The germination rate (%) obtained 10 days after sowing was particularly evaluated as germination vigor (%). The germination vigor is a measure of germination speed or whether germination is uniform, and higher germination vigor values mean faster and more uniform germination. In the case of seeds of a plant that takes long time to germinate, the number of days after sowing was changed as appropriate to obtain the germination vigor.

The germination rate (%) obtained 14 days after sowing was particularly evaluated as the final germination rate (%). In the case of seeds of a plant that takes long time to germinate, the number of days after sowing was changed as appropriate to obtain the final germination rate.

### (Example 1)

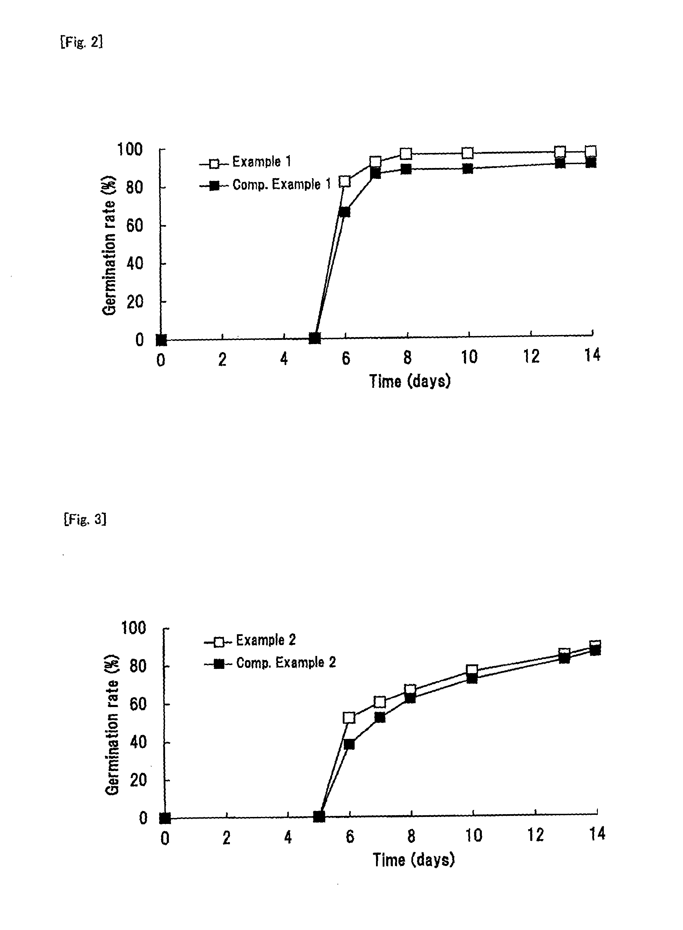

First, 0.01 g of seeds of a cultivar of *Eustoma grandiflorum,* "F₁ Mellow Violet" (purchased from Takii & Co., Ltd.) was placed in a 1.5 mL test tube. Subsequently, 1.5 mL of a medium-chain triglyceride (manufactured by NOF Corporation) was gently poured into the test tube, which was then capped. The seeds were completely immersed in the medium-chain triglyceride. This test tube was stored at 4°C in darkness for 18 months, and afterward, the seeds were removed from the test tube, and a germination rate test was performed. Fig. 2 shows the results regarding time-dependent changes in the germination rate.

### (Comparative Example 1)

The same operation as in Example 1 was performed except that no medium-chain triglyceride was added to the test tube. Fig. 2 shows the results regarding time-dependent changes in the germination rate.

As shown in Fig. 2, while the final germination rate (the germination rate obtained 14 days after sowing) in Comparative Example 1 was 90%, the final germination rate in Example 1 was 96%. While the germination vigor (the germination rate obtained 10 days after sowing) in Comparative Example 1 was 88%, the germination vigor in Example 1 was 96%. The results indicate that decreases in the germination rate and the germination vigor due to long-term storage of the seeds were suppressed by immersion in the oily substance.

### (Example 2)

The same operation as in Example 1 was performed except that the seeds of *Eustoma grandiflorum* "F₁ Mellow Violet" were replaced by seeds of a cultivar of *Eustoma grandiflorum,* "F₁ Mellow Pink" (purchased from Takii & Co., Ltd.). Fig. 3 shows the results regarding time-dependent changes in the germination rate.

### (Comparative Example 2)

The same operation as in Example 2 was performed except that no medium-chain triglyceride was added to the test tube. Fig. 3 shows the results regarding time-dependent changes in the germination rate.

As shown in Fig. 3, while the final germination rate (the germination rate obtained 14 days after sowing) in Comparative Example 2 was 86%, the final germination rate in Example 2 was 88%. While the germination vigor (the germination rate obtained 10 days after sowing) in Comparative Example 2 was 72%, the germination vigor in Example 2 was 76%. The results indicate that decreases in the germination rate and the germination vigor due to long-term storage of the seeds were suppressed by immersion in the oily substance.

### (Example 3)

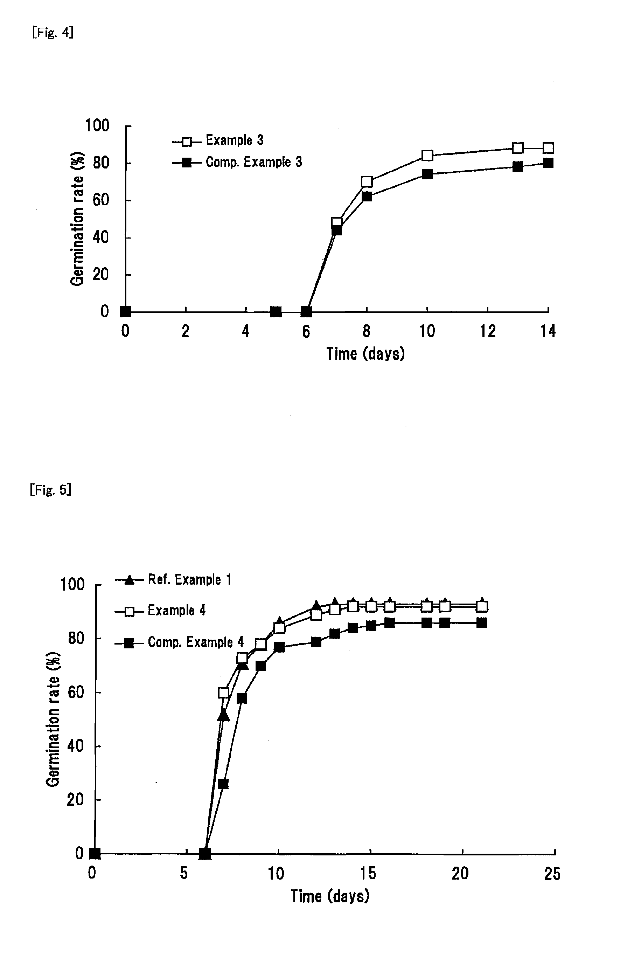

The same operation as in Example 1 was performed except that the seeds of *Eustoma grandiflorum,* "F₁ Mellow Violet" was replaced by seeds of a cultivar of *Eustoma grandiflorum,* "Kyo no Warabe" (purchased from Takii & Co., Ltd.). Fig. 4 shows the results regarding time-dependent changes in the germination rate.

### (Comparative Example 3)

The same operation as in Example 3 was performed except that no medium-chain triglyceride was added to the test tube. Fig. 4 shows the results regarding time-dependent changes in the germination rate.

As shown in Fig. 4, while the final germination rate (the germination rate obtained 14 days after sowing) in Comparative Example 3 was 80%, the final germination rate in Example 3 was 88%. While the germination vigor (the germination rate obtained 10 days after sowing) in Comparative Example 3 was 74%, the germination vigor in Example 3 was 84%. The results indicate that decreases in the germination rate and the germination vigor due to long-term storage of the seeds were suppressed by immersion in the oily substance.

### (Example 4)

Seeds of *Eustoma grandiflorum* "F₁ Mellow Violet" were encapsulated in seamless capsules. The seeds were encapsulated in the following manner.

An outer layer composition and an innermost layer composition (containing 1 wt% of *Eustoma grandiflorum* "F₁ Mellow Violet" seeds (having a diameter of about 0.3 mm)) composed of components listed in Table 1 were prepared, respectively.

**Table 1**

| | | | |
|---|---|---|---|
| Composition (wt%) | Outer layer | Gelatin | 22 |
| | | Sorbitol | 3.5 |
| | | Glycerin | 5 |
| | | Purified water | 69.5 |
| | Inner most layser | Medium chain fatty acid triglyceride | 49 |
| | | Sucrose fatty acid ester | 50 |
| | | Seeds of *Eustom a grandiflorum* (F₁ Mellow Violet) | 1 |

Next, a capsule production device equiped with a concentric double nozzle as shown in Fig. 1 was provided with circulating vegetable oil with cooling to 15°C as a carrier fluid 2. The outer layer composition warmed to 55°C and the innermost layer composition were injected from an outer nozzle and an inner nozzle, respectively, of this device, into the carrier fluid 2, such that the two-layer combined jet was formed at a constant rate (0.5 m/ second), thereby giving seed-containing wet capsules.

The seed-containing wet capsules were dried with a through-flow rotary drier under conditions of 25°C and an RH of 50%, and thus encapsulated seeds in seamless capsules were obtained.

The thus prepared encapsulated seeds in the seamless capsules were stored at 4°C in darkness for 18 months, and afterward, a germination rate test was performed. Fig. 5 shows the results regarding time-dependent changes in the germination rate.

### (Comparative Example 4)

The same operation as in Example 4 was performed except that seeds were not encapsulated in seamless capsules. Fig. 5 shows the results regarding time-dependent changes in the germination rate.

### (Reference Example 1)

In Example 4 and Comparative Example 4, each time the stored seeds were removed and subjected to the germination rate test, a germination rate test for separate seeds of *Eustoma grandiflorum* "F₁ Mellow Violet" that had been newly purchased was also performed at the same time. Fig. 5 shows the results regarding time-dependent changes in the germination rate.

As is clear from Fig. 5, both the final germination rate (the germination rate obtained 14 days after sowing) and the germination vigor (the germination rate obtained 10 days after sowing) of the seeds that had been encapsulated in the seamless capsules and immersed in the oily substance (Example 4) were higher than those of the seeds that had not been encapsulated in seamless capsules (i.e., that had not been immersed in any oily substance) (Comparative Example 4) and were equivalent to those of the seeds that had been newly purchased for each germination rate test (Reference Example 1). The results indicate that decreases in the germination rate and the germination vigor due to long-term storage of the seeds were suppressed by immersion in the oily substance.

### (Example 5)

First, 0.01 g of seeds of *Eustoma grandiflorum* "F₁ Mellow Violet" was placed in each of 1.5 mL test tubes. Subsequently, 1.5 mL of a medium-chain triglyceride was gently poured into each test tube, which was then capped. The seeds were completely immersed in the medium-chain triglyceride. The test tubes were stored at 4°C or 25°C in darkness for 6 months, 18 months, or 36 months, and afterward, the seeds were removed from the test tubes, and a germination rate test was performed. A germination rate test for *Eustoma grandiflorum* "F₁ Mellow Violet" seeds immediately after purchasing was also performed at the same time. Table 2 shows the results regarding the final germination rate (the germination rate obtained 14 days after sowing) and the germination vigor (the germination rate obtained 10 days after sowing).

### (Comparative Example 5)

The same operation as in Example 5 was performed except that no medium-chain triglyceride was placed in the test tube. Table 2 shows the results regarding the final germination rate (the germination rate obtained 14 days after sowing) and the germination vigor (the germination rate obtained 10 days after sowing).

### (Reference Example 2)

In Example 5 and Comparative Example 5, each time the stored seeds were removed and subjected to the germination rate test, a germination rate test for separate seeds of *Eustoma grandiflorum* "F₁ Mellow Violet" that had been newly purchased was also performed at the same time. Table 2 shows the results regarding the final germination rate (the germination rate obtained 14 days after sowing) and the germination vigor (the germination rate obtained 10 days after sowing).

### (Examples 6 to 16)

The same operation as in Example 5 was performed except that the medium-chain triglyceride was replaced by 90 wt% of the medium-chain triglyceride + 10 wt% of a soybean lecithin (manufactured by NOF Corporation) (Example 6), a long-chain triglyceride (manufactured by NOF Corporation) (Example 7), 90 wt% of the long-chain triglyceride + 10 wt% of the soybean lecithin (Example 8), 80 wt% of the medium-chain triglyceride + 20 wt% of a sucrose fatty acid ester (manufactured by Mitsubishi-Kagaku Foods Corporation) (Example 9), butanoic acid (manufactured by Wako Pure Chemical Industries, Ltd.) (Example 10), octanoic acid (manufactured by Wako Pure Chemical Industries, Ltd.) (Example 11), a mint oil (manufactured by Nagaoka & Co., Ltd.) (Example 12), a rapeseed oil (manufactured by Nisshin OilliO Group, Ltd.) (Example 13), an olive oil (manufactured by Nisshin OilliO Group, Ltd.) (Example 14), a sesame oil (manufactured by Nisshin OilliO Group, Ltd.) (Example 15), dibutyl ether (manufactured by Wako Pure Chemical Industries, Ltd.) (Example 16), or undecyl alcohol (manufactured by Wako Pure Chemical Industries, Ltd.) (Example 17). Table 2 shows the results regarding the final germination rate (the germination rate obtained 14 days after sowing) and the germination vigor (the germination rate obtained 10 days after sowing).

**Table 2**

| | Oily substance | Germination rate (%) | | | | | | | | | | | | |
|---|---|---|---|---|---|---|---|---|---|---|---|---|---|---|
| | | Seeds immediately after purchasing | Stored at 4°C | | | | | | Stored at 25°C | | | | | |
| | | | 6 months | | 18 months | | 36 months | | 6 months | | 18 months | | 36 months | |
| | | 14 days | 10 days | 14 days | 10 days | 14 days | 10 days | 14 days | 10 days | 14 days | 10 days | 14 days | 10 days | 14 days |
| Example 5 | Medium-chain fatty acid triglyceride | 97 | 96 | 96 | 95 | 95 | 94 | 96 | 93 | 94 | 90 | 92 | 89 | 93 |
| Example 6 | Medium-chain fatty acid triglyceride 90% + Soybean lecithin 10% | 96 | 96 | 96 | 95 | 95 | 94 | 94 | 93 | 95 | 89 | 93 | 93 | 94 |
| Example 7 | Long-chain fatty acid triglyceride | 96 | 95 | 95 | 97 | 97 | 94 | 96 | 91 | 94 | 92 | 95 | 93 | 93 |
| Example 8 | Long-chain fatty acid triglyceride 90% + Soybean lecithin 10% | 94 | 96 | 96 | 95 | 95 | 94 | 96 | 93 | 96 | 90 | 95 | 93 | 94 |
| Example 9 | Medium-chain fatty acid triglyceride 80% + Sucrose fatty acid ester 20% | 96 | 95 | 95 | 97 | 98 | 95 | 96 | 94 | 94 | 91 | 95 | 91 | 95 |
| Example 10 | Butanoic acid | 95 | 94 | 94 | 95 | 95 | 95 | 96 | 95 | 96 | 93 | 96 | 92 | 95 |
| Example 11 | Octanoic acid | 97 | 93 | 93 | 96 | 96 | 95 | 95 | 93 | 93 | 91 | 93 | 90 | 93 |
| Example 12 | Peppermint oil | 94 | 94 | 95 | 95 | 95 | 93 | 95 | 94 | 95 | 91 | 91 | 94 | 94 |
| Example 13 | Rape seed oil | 93 | 91 | 92 | 91 | 92 | 91 | 94 | 91 | 91 | 91 | 91 | 90 | 92 |
| Example 14 | Olive oil | 92 | 94 | 93 | 93 | 92 | 92 | 90 | 92 | 93 | 91 | 91 | 91 | 88 |
| Example 15 | Sesame oil | 96 | 91 | 95 | 93 | 93 | 90 | 94 | 91 | 95 | 93 | 91 | 91 | 93 |
| Example 16 | Dibutylether | 92 | 93 | 94 | 90 | 91 | 92 | 92 | 91 | 92 | 93 | 94 | 91 | 92 |
| Example 17 | Undecylic acid | 94 | 94 | 96 | 94 | 94 | 90 | 92 | 94 | 95 | 95 | 94 | 89 | 92 |
| Comp. Example 5 | - | 96 | 89 | 91 | 77 | 84 | 45 | 71 | 81 | 81 | 43 | 65 | 18 | 30 |
| Ref. Example 2 | - (Newly purchased seeds) | - | 95 | 95 | 86 | 93 | 81 | 94 | 95 | 95 | 78 | 92 | 75 | 94 |

As is clear from Table 2, irrespective of the storage temperature and the storage period, both the final germination rate (the germination rate obtained 14 days after sowing) and the germination vigor (the germination rate obtained 10 days after sowing) of the seeds that had been immersed in the oily substances (Examples 5 to 17) were higher than those of the seeds that had not been immersed in any oily substance (Comparative Example 5) and were equal to those of the seeds that had been newly purchased for each germination rate test (Reference Example 2). The results indicate that decreases in the germination rate and the germination vigor of the seeds due to long-term storage were suppressed by immersion in the oily substances.

### (Example 18)

First, 1 part by weight of seeds of a cultivar of maize, "Gold Rush" (purchased from Sakata Seed Corporation) and 5 parts by weight or 100 parts by weight of a long-chain triglyceride (manufactured by NOF Corporation) were mixed and sealed. The seeds were completely immersed in the long-chain triglyceride. After storage at 25°C for one year, the seeds were removed, and a germination rate test was performed. As a control for comparison, the same operation was performed except that no long-chain triglyceride was mixed. A germination rate test for seeds of the maize "Gold Rush" immediately after purchasing was also performed at the same time. Table 3 shows the results regarding the final germination rate and the germination vigor.

### (Examples 19 to 25)

The same operation as in Example 18 was performed except that the seeds of the maize "Gold Rush" were replaced by seeds of a cultivar of radish, "Comet" (purchased from Takii & Co., Ltd.) (Example 19), seeds of a cultivar of soybean, "Tsurumusume" (purchased from Ohtsuya Co., Ltd.) (Example 20), seeds of a cultivar of common bean, "Aaron" (purchased from Sakata Seed Corporation) (Example 21), seeds of a cultivar of cabbage, "Akimikado" (purchased from Sakata Seed Corporation) (Example 22), seeds of a cultivar of gerbera, "Tiara" (purchased from Miyoshi & Co., Ltd.) (Example 23), seeds of a cultivar of viola,"F1 Vivi Faces" (purchased from Takii & Co., Ltd.) (Example 24), or seeds of a cultivar of Japanese cedar, "Yoshino Sugi" (obtained from Field Center for Sustainable Agriculture and Forestry, Faculty of Agriculture, Niigata University) (Example 25). Table 3 shows the results regarding the final germination rate and the germination vigor.

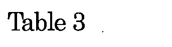

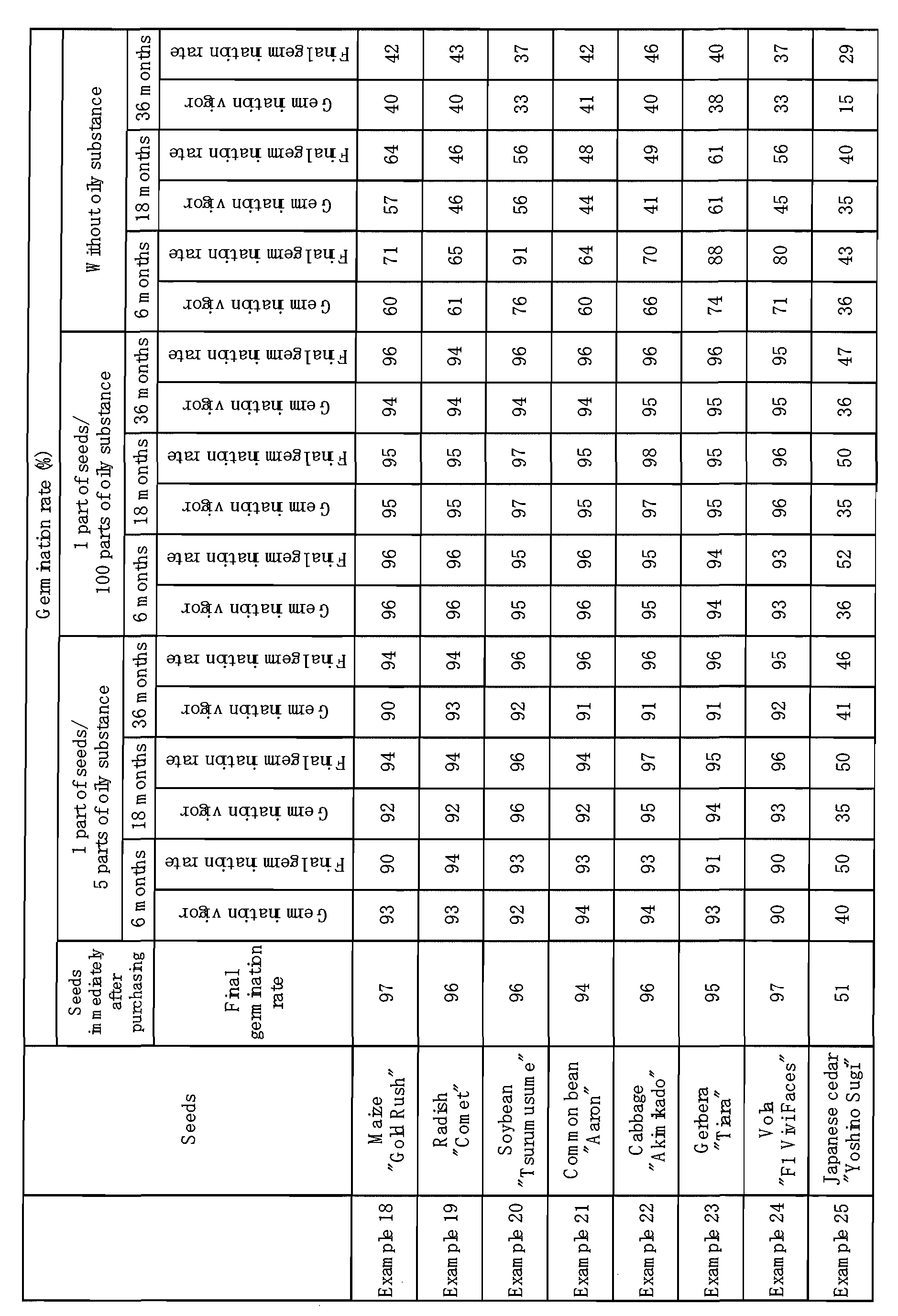

As is clear from Table 3, both the final germination rate and the germination vigor of the seeds that had been immersed in the oily substances were higher than those of the seeds that had not been immersed in any oily substance irrespective of the mixing ratio of the seeds to the oily substance. The results indicate that decreases in the germination rate and in the germination vigor due to long-term storage of the seeds were suppressed by immersion in the oily substances.

### Industrial Applicability

The method for storing seeds according to the present invention makes it possible to stably maintain the germination rate and the germination vigor of seeds for a long period of time in a simple manner. In addition, it is not necessarily required to use a special apparatus or means such as a refrigerator, a freezer, or liquid nitrogen, and the seeds can be stored anywhere regardless of whether it is indoors or outdoors. Thus, the method is effective in increasing the efficiency and reducing the costs of plant cultivation, as well as enhancing and maintaining the commercial value of resulting products. Moreover, the method is also expected to serve as a potent means for saving rare plant species from extinction.

### Description of Numerals

- 1: Concentric double nozzle
- 2: Carrier fluid
- 3: Seamless capsule
- 11: Inner nozzle
- 12: Outer nozzle
- 31: Outer layer composition
- 32: Inner layer composition

## Claims

1. A method for storing seeds, comprising the step of immersing seeds in an oily substance having a boiling point of 100°C or higher.

2. The method of claim 1, wherein the oily substance has a melting point of 60°C or lower.

3. The method of claim 1 or 2, wherein the oily substance is at least one selected from the group consisting of fats and oils, fatty acids, fatty acid esters, hydrocarbons having 7 or more carbon atoms, chain ethers having 8 or more carbon atoms, alcohols, terpenes, sterols, silicones, and beeswax derivatives.

4. The method of any one of claims 1 to 3, wherein the seeds are seeds of at least one selected from the group consisting of cereal crops, vegetables, fruit trees, flowers and ornamental plants, trees, pulses, lawn grasses, and pasture grasses.
